# EUROPEAN PATENT APPLICATION

(11) **EP 2 023 538 A1**
(43) Date of publication of application: **11.02.2009**
(21) Application number: 07721298.3
(22) Date of filing: 29.05.2007
(51) Int. Cl.: H04L 12/28

(54) **THE CONTROL METHOD AND SYSTEM OF MULTI-TRAFFIC ACCESS NETWORK**

(30) Priority: 29.05.2006 CN 200610060902
(71) Applicant: Huawei Technologies Co., Ltd., Longgang District, Shenzhen Guangdong 518129 (CN)
(72) Inventor: OUYANG, Weilong, Guangdong 518129 (CN)
(74) Representative: Hengelhaupt, Jürgen
(86) International application number: PCT/CN2007/001725
(87) International publication number: WO 2007/137512

(57) **Abstract**

A method for controlling a multi-service access network includes: receiving a request initiated by a user; setting up a connection link from an access node (AN) to an access network edge (ANE) according to the user request; and setting a subscriber access link (SAL), or/and assigning resources, and mapping the user flow to the SAL according the link ID and IP address of the user, and associating the user attributes, IP address, SAL ID, agreed resources and network ID information. Accordingly, a system for controlling a multi-service access network is also provided. In the technical solution of the present invention, a link management function is adapted to differentiate services with links, thus assuring the QoS of multiple services in an access network. With the technical solution, a user can access multiple services dynamically and multi-service based access network QoS control is implemented.

## Description

This application claims a priority from the Chinese Patent Application No. 200610060902.X, filed with the Chinese Patent Office on May 29, 2006 and entitled "Method and System for Controlling a Multi-Service Access Network", the contents of which are incorporated herein by reference in their entirety.

### Field of the Invention

The present invention relates to the access network technologies, and in particular, to a method and system for controlling a multi-service access network.

### Background of the Invention

With the development of communication technologies, a next generation access network is required to provide multiple edges so that a user can be accessed to different network service providers (NSPs) and application service providers (ASPs) via a common layer-2 link provided by the access network. The user may choose a service or destination via a user-defined control interface or tunnel, or the access network may choose the service or destination without the participation of a user.

To provide greater bandwidth for a user, the access network must have a greater transport capability. The operator requires that access network resources should be utilized most efficiently so that the operator gains the largest benefits. Dynamic quality of service (QoS) mechanisms like bandwidth on demand, application and session based QoS control are powerful means for improving the utilization of access network resources. The corresponding QoS solutions are also proposed.

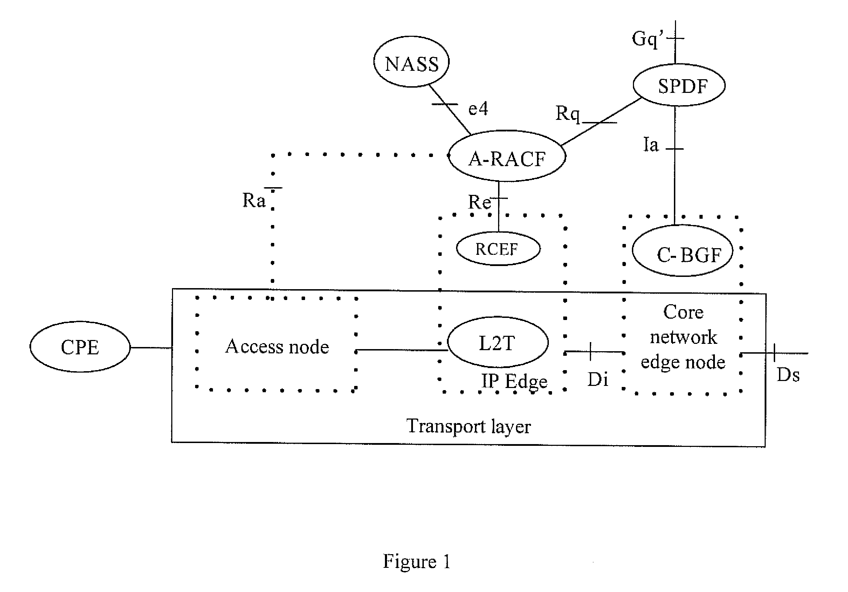

The prior QoS control architecture is shown in Figure 1. A transport control layer, resource and admission control subsystem (RACS), is added between the service layer and the transport layer. The RACS includes a service-based policy decision function (SPDF) and an access-resource and admission control function (A-RACF). The service layer requests service resources and control policies from the RACS via a Gq' interface. The RACS delivers the resource requests and control policies to the appropriate IPEdge and border node for resource assignment and policy execution. The access node (AN) is an edge access node of the access network.

The IPEdge is an edge node of the access network and is connected to the IP transport network.

The network attachment subsystem (NASS) provides only data and control interfaces to the IPEdge. The NASS processes authorization, authentication, and address assignment for users of the access network and notifies the RACS of the user attributes and IP addresses via the e4 interface.

However, the above QoS control architecture does not realize the dynamic access of users. The e4 interface only pushes the service attributes of a user when the user accesses the network. Gq' is a session based resource control interface. When a user accesses different services dynamically, the user will have different service attributes. The architecture, however, is not capable of the dynamic access to different services.

### Summary of the Invention

Embodiments of the present invention provide a method and system for controlling a multi-service access network so that a user can be dynamically accessed to multiple services.

A method for controlling a multi-service access network includes:
receiving a request initiated by a user;
setting up a connection link from an access node (AN) to an access network edge (ANE) according to the user request;
setting up a subscriber access link (SAL) or/and assigning resources; and
after the SAL is set up, further mapping a user flow to the SAL according to link ID information and an Internet Protocol (IP) address of the user and associating the user attributes, IP address, SAL ID, agreed resources and network ID (NID) information.

A system for controlling a multi-service access network includes a link management function (LMF) and a policy execution function (PEF):
the LMF is adapted to manage links and resources of users between network elements in the access network;
the PEF is adapted to control resource admission and execute policies according to user attributes or deploy policies on network devices between an access node (AN) and an access network edge (ANE);
when a user initiates a request, the PEF sends a request to the LMF according to the user request, requesting setup of a link from the AN to the ANE or/and assignment of appropriate resources; and
the LMF sets up a link or/and assigns resources according to the request received from the PEF.

In the technical solution provided by embodiments of the invention, an LMF is adapted to differentiate services with different links to guarantee the QoS of multiple services in the access network. With the technical solution, a user may access multiple services dynamically and multi-service based access network QoS control may be implemented.

### Brief Description of the Drawings

Figure 1 shows the QoS control architecture in the prior art;
Figure 2 shows the structure of a system for controlling a multi-service access network according to an embodiment of the invention; and
Figure 3 shows a resource assignment and state detection procedure in a method for controlling a multi-service access network according to an embodiment of the invention.

### Detailed Description of the Invention

The present invention is hereinafter described in detail with reference to some embodiments and the accompanying drawings.

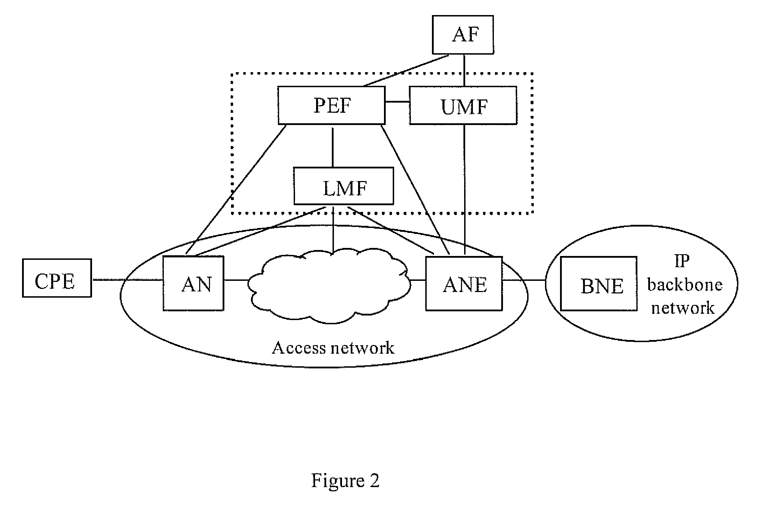

One embodiment of the present invention introduces a control architecture for a multi-service access network. As shown in Figure 2, the architecture includes:
a customer premises equipment (CPE);
an access node (AN), which is the user side edge of the access network and may access multiple ANEs;
an access network edge (ANE), which is the network side edge of the access network and may be accessed by multiple ANs;
a backbone network edge (BNE);
a user management function (UMF), adapted to process authentication, authorization and address assignment, which may interact with an application function (AF) directly or indirectly;
a link management function (LMF), adapted to manage links and resources of users between network elements in the access network; and
a policy execution function (PEF), adapted to control resource admission and execute policies or deploy them on network devices between the AN and the ANE according to user attributes, which may interact with the AF directly or indirectly.

Assumptions:
(1) Each CPE matches at least one unique logical link on the AN. For example, each digital subscriber line (DSL) port matches a logical link ID. A customer premises equipment (CPE) may be an access network terminal such as a DSL modem or a user terminal such as a personal computer (PC) or a set-top box (STB).
(2) The AN provides multiple access technologies and may adapt the access technologies to provide a uniform uplink interface. The CPE may access the AN via different access technologies, such as xDSL, Ethernet, passive optical network (PON), and worldwide interoperability for microwave access (WiMAX).
(3) The LMF needs to set up an initial link from AN to ANE for each logical link on the AN.
(4) Links between AN and ANE may be isolated by means of link IDs.

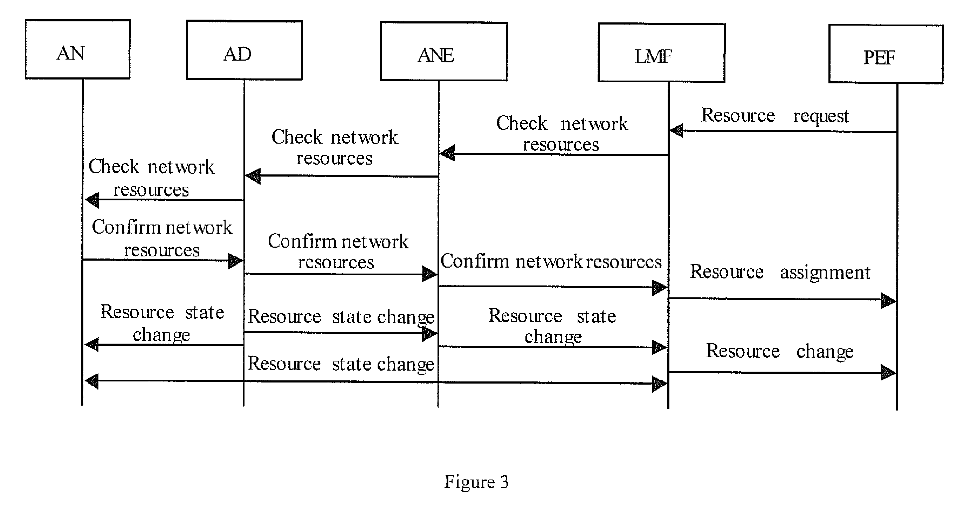

The following describes procedures for accessing the network, accessing a service, using a service, and assigning resources with reference to Figure 2 and Figure 3 according to embodiments of the invention.

The procedure for accessing the network includes:
S101. The user initiates a network access request via the CPE; the AN maps the logical link from CPE to AN to a logical link from AN to ANE, adds the network ID of the AN (A-NID) to the access request, and forwards the request to the ANE (the network ID is E-NID); the ANE forwards the request to the appropriate UMF for processing of the access request of the user, such as authentication and address assignment.
S102. The UMF pushes the user attributes, IP address, A-NID and E-NID to the PEF.
S103. The PEF instructs the LMF to assign a subscriber access link (SAL) from AN to ANE to the user according to the user attributes (including IP address, bandwidth and priority) and A-NID and E-NID.
S104. The LMF sets up a link from AN to ANE (SAL) by sending appropriate commands to network devices from AN to ANE and assigns a link ID (SAL-ID) and the agreed resources. Meanwhile, the AN and the ANE may differentiate the user flow according to SAL-ID and IP address information of the user and map the user flow to the link. (The network IDs of the AN and ANE may be obtained according to SAL-ID, for example, SAL-ID = F (A-NID, E-NID, LL-ID), where LL-ID is the local link ID.)
S105. After the SAL is set up successfully, the PEF associates the user attributes, IP address, SAL-ID, agreed resource, A-NID, and E-NID and sets the AN and the ANE according to SAL-ID, user attributes (such as SLA) and the user policy, so as to guarantee that the SAL of the network that the user passes complies with the service level agreement (SLA) signed by the user.

The procedure for accessing a service includes:
S201. The user initiates a registration request to the AF, requesting to access a service. The AF authenticates the user according to user attributes provided by the UMF or checks with the UMF whether the user can access the service.
S202. The AF notifies the PEF that the user wants to access the service network. According to the user attributes pushed by the UMF, the PEF checks whether the user is allowed to access the network and checks the resource requirement.
S203. When the PEF admits the user access resource request, the PEF sends a request to the LMF according to the IP address, SAL-ID, and service ID of the user and the related user attributes, requesting setup of a subscriber service link (SSL) from AN to ANE and assignment of appropriate resources.
S204. The LMF sets up a link from AN to ANE (SSL) by sending appropriate commands to network devices from AN to ANE and assigns a link ID (SSL-ID) and the agreed resources. Meanwhile, the AN and the ANE may differentiate the user flow according to the link address, IP address and port number information of the user and map the user's service flow to the link. In addition, the AN and the ANE set up an association between SAL and SSL to ensure that the sum of resources used by the two types of links is the maximum of available resources agreed by the user and the access network operator. Then, a response is sent to the PEF, indicating a successful resource request.
S205. The PEF determines that the resource request is successful and sets the user service policy of the AN and the ANE according to SSL-ID and service attributes, to ensure that the SAL of the network that the user passes complies with the signed SLA.

The procedure for using a service includes:
S301. The user initiates a service call via the SSL.
S302. While connecting the service call, the AF obtains the SSL resource requirement and requests network resources via the PEF.
S303. If the user has no SSL, steps S203 and S204 in the service access procedure are executed to set up the SSL and obtain the SSL-ID and resources. Otherwise, the PEF requests access network resources from the LMF according to the SSL-ID and service ID of the user. The LMF checks the resources already used by the SAL and SSL of the user and assigns appropriate resources to the user.
S304. After successful resource assignment, the PEF updates policies of the AN and the ANE such as the service flow differentiating rule according to the user session.
S305. The PEF notifies the AF that the service call can be accepted.
S306. After the service call is connected, the service flow of the user is mapped to the SSL of the user by the AN or ANE. The AN schedules resources available for the service flow according to the SSL and SAL attributes, so as to guarantee the QoS of the service flow in the access network.

The procedure for assigning resources includes:
S401. When the AF requests network resources via the PEF, the LMF sends a resource assignment request to the ANE according to the SSL-ID of the user.
S402. The ANE receives the resource assignment request and sends a resource request to the link indicated by the SSL-ID after the ANE determines that there are sufficient resources for the user.
S403. An Aggregation Device (AD) on the way of the resource request message analyzes whether the remaining resources are sufficient for the user, and if sufficient, the AD assigns appropriate resources to the user, or else, the AD writes the maximum resources that the AD can provide for the user into the message and forwards the request message along the SSL. This continues until the message arrives at the AN.
S404. The AN checks the link from ANE to AN has sufficient resources, and sends a resource admission report to the ANE along the SSL. The ADs on the way of the report confirm that the assigned resources are effective and start the soft state management until the message arrives at the ANE.
S405. The ANE receives the resource admission report and responds to the LMF with the resource admission information. The LMF responds to the PEF with resource assignment information.
S406. When a device adjacent to an AD between AN and ANE fails, the AD reports the change of the resource state to the AN or ANE via the SSL or SAL, so that the ANE, AN and ADs on the previous paths of the SSL and SAL know the resource change and further reclaim and reassign resources; when the AN receives a resource state change, the AN may notify the ANE of the state change of the admitted resources so that the AN and the ANE see a consistent resource state.
S407. When the ANE detects or receives a resource state change, the ANE notifies the PEF of the resource state change.

According to an embodiment of the invention in Figure 2, a system for controlling a multi-service access network includes a UMF, an LMF, and a PEF, where:
the UMF is adapted to authenticate and authorize users and assign addresses to users;
the LMF is adapted to manage links and resources of users between network elements in the access network;
the PEF is adapted to control resource admission and execute policies according to user attributes or deploy policies on network devices between AN and ANE;
the LMF and PEF are connected respectively to the AN and ANE;
the PEF is connected respectively to the LMF and UMF; and
the LMF receives a request from the PEF for setting up a link from AN to ANE and sets up a link or/and assigns resources according to the request.

Those skilled in the art understand that all or part of the foregoing functions and steps in embodiments of the invention can be implemented by hardware under the instruction of a program, which may be stored in a computer-readable storage medium, like a read only memory (ROM) or random access memory (RAM), a magnetic disk or a compact disk. Or the functions and steps may be built into separate integrated circuit modules, or several functions or steps may be built into one integrated circuit module. Thus, embodiments of the invention are not limited to any specific combination of hardware and software.

In the technical solution provided by embodiments of the invention, an LMF is adapted to differentiate services with different links to guarantee the QoS of multiple services in the access network. With the technical solution, a user may access multiple services dynamically and multi-service based access network QoS control may be implemented.

Although the present invention has been described through exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the claims or their equivalents.

## Claims

1. A method for controlling a multi-service access network, **characterized by** comprising:
receiving a request initiated by a user;
setting up a connection link from an access node (AN) to an access network edge (ANE) according to the user request; and
setting up a subscriber access link (SAL) or/and assigning resources.

2. The method according to claim 1, **characterized by** further comprising:
after the SAL is set up, mapping a user flow to the SAL according to link ID information and an Internet Protocol (IP) address of the user and associating the user attributes, IP address, SAL ID, agreed resources and network ID (NID) information.

3. The method according to claim 1 or 2, **characterized in that** if the user request is a network access request, the method further comprises:
carrying the user attributes, IP address, NID of the AN, and NID of the ANE in the network access request.

4. The method according to claim 3, **characterized in that** the step of setting up a link from an AN to an ANE comprises:
Setting up the SAL from the AN to the ANE and assigning an appropriate link ID to the SAL; and
mapping, by the AN and the ANE, the user flow to the link.

5. The method according to claim 3, **characterized by** further comprising:
setting user policies of the AN and the ANE after the SAL setting is completed.

6. The method according to claim 1 or 2, **characterized in that** if the user request is a service access request, the step of initiating the request further comprises:
initiating, by the user, a service access request via the SAL after the user sends the request;
authenticating the user or checking with a user management function (UMF) whether the user can access the service; and
checking whether the user can access the network and the required resources according to user attributes

7. The method according to claim 6, **characterized in that** after setting up the link or assigning resources, the method further comprises:
associating the SAL and a subscriber service link (SSL) and responding success information of the resource request; and
setting user service policies of the AN and the ANE after determining success of the resource request.

8. The method according to claim 1 or 2, **characterized in that** if the user request is a service usage request, the step of initiating the request further comprises:
initiating, by the user, a service call via an SSL; and
requesting network resources according to the resource requirement of the SSL.

9. The method according to claim 8, **characterized by** further comprising:
requesting setup of an SSL and obtaining an SSL ID and assigned resources, if the user has not set up an SSL; or
requesting resources of the access network if an SSL is already set up.

10. The method according to claim 8, **characterized in** by further comprising:
checking resources already used by the SAL and the SSL upon reception of the network resource request, and assigning appropriate resources to the user according to the network resource request;
updating the service policies of the AN and the ANE upon successful resource assignment; and
accepting the service call.

11. The method according to claim 8, **characterized by** further comprising:
scheduling resources available for the service flow after setting up the link or assigning resources.

12. The method according to claim 10, **characterized in that** the step of checking resources already used by the SAL and the SSL and assigning appropriate resources comprises:
receiving a resource assignment request and sending a resource request message after determining there are sufficient resources for the user;
by a network device on the way of the resource request message, analyzing whether its remaining resources are sufficient for the user, and if sufficient, assigning appropriate resources to the user, or else, writing the maximum resources the network device can provide for the user into the message and forwarding the request message along the SSL until the message arrives at the AN;
by the AN, checking whether the link from the ANE to the AN has sufficient resources and sending a resource admission report message to the ANE in response to the request, and upon reception of the message, by a network device on the forwarding path of the message, confirming assigned resources are effective until the message arrives at the ANE; and
returning, by the ANE, resource admission information to a link management function (LMF) upon reception of the resource admission report, and returning, by the LMF, resource assignment information to a policy execution function (PEF).

13. The method according to claim 10, **characterized in that** when a device adjacent to an access network device between the AN and the ANE fails after successful resource assignment and causes a change to the resource state, the step of updating service policies of the AN and the ANE further comprises:
reporting, by a network device on the way of the resource request message, the resource state change to the AN or ANE;
by the AN, ANE and network devices on the previous path of the SSL and SAL, knowing the change of resources and reclaiming resources and reassigning resources;
re-notifying, by the AN after knowing the resource state change, the ANE of the state change of admitted resources; and
notifying, by the ANE, the PEF of the resource state change upon detection or reception of a resource state change.

14. A system for controlling a multi-service access network, comprising a link management function (LMF) and a policy execution function (PEF), wherein:
the LMF is adapted to manage links and resources of users between network elements in the access network;
the PEF is adapted to control resource admission and execute policies according to user attributes or deploy policies on network devices between an access node (AN) and an access network edge (ANE);
when a user initiates a request, the PEF sends a request to the LMF according to the user request, requesting setup of a link from the AN to the ANE or/and assignment of appropriate resources; and
the LMF sets up a link or/and assigns resources according to the request received from the PEF.

15. The system according to claim 14, **characterized in that:**
when a user initiates a service access request, the LMF instructs the AN and the ANE to set up a subscriber service link (SSL) from the AN to the ANE and assign an appropriate link ID and agreed resources; and
the LMF controls to establish a mapping between the user service flow and the link from the AN to the ANE.

16. The system according to claim 14, **characterized in that:**
after a subscriber access link (SAL) is set up, the LMF maps the user flow to the SAL according to the link ID and IP address of the user.

17. The system according to claim 14, **characterized by** further comprising a user management function (UMF), wherein:
the UMF is adapted to authenticate and authorize users and assign addresses to users;
the UMF authenticates a user upon reception of an access request from the user; and after the authentication is successful, the UMF pushes the user attributes, IP address, network ID (NID) of the AN and NID of the ANE to the PEF.

18. The system according to claim 17, **characterized in that** after the SAL is set up, the PEF associates the user attributes, IP address, SAL ID, agreed resources and NID information and sets user policies of the AN and the ANE.
